# DEMANDE DE BREVET EUROPEEN

(11) **EP 0 978 432 A1**
(43) Date de publication de la demande: **09.02.2000**
(21) Numéro de dépôt: 99401961.0
(22) Date de dépôt: 02.08.1999
(51) Int. Cl.: B60T 7/10, B60T 13/74

(54) **Dispositif de commande à main d'un actionneur électronique d'activation d'un système fonctionnel, notamment d'un frein secondaire de véhicule automobile**

(30) Priorité: 04.08.1998 FR 9809975
(71) Demandeur: AUTOMOBILES PEUGEOT, 75116 Paris (FR); AUTOMOBILES CITROEN, 92200 Neuilly-sur-Seine (FR)
(72) Inventeur: Goly, Fabrice, 95610 Eragny sur Oise (FR)
(74) Mandataire: Gendraud, Pierre

(57) **Abrégé**

Ce dispositif comporte un levier de commande actionnable par un utilisateur pour piloter l'alimentation de l'actionneur électrique en fonction d'une information de position dudit levier délivrée par un capteur qui lui est associé. Ce capteur est relié à un calculateur pilotant en fonction de l'information de position du levier les quantités de courant à envoyer à l'actionneur électrique.

Selon la présente invention, le levier de commande (2) est pourvu d'un interrupteur (12) qui est relié au calculateur (11) de manière à transmettre en fonction de la position de l'interrupteur une information soit d'alimentation maximale en quantité d'énergie de l'actionneur afin de serrer les organes de freinage soit une remise à niveau proportionnel à la position du levier (2) des moyens d'alimentation de façon à desserrer les organes de freinage.

## Description

La présente invention concerne un dispositif de commande à main des organes de freinage secondaire d'un véhicule automobile.

Elle se rapporte plus particulièrement à un dispositif de commande à main permettant de piloter un actionneur électrique de manière à activer ou désactiver les organes de freinage reliés aux roues du véhicule qui sont constitués, par exemple, d'au moins deux câbles associés respectivement à un étrier de freinage d'une roue arrière ou avant du véhicule, par enroulement ou déroulement des câbles.

On connaît déjà un dispositif de commande à main constitué d'un interrupteur permettant d'alimenter ou non l'actionneur, c'est-à-dire de provoquer un serrage ou un desserrage complet des organes de freinage du véhicule.

Un tel dispositif de commande présente l'inconvénient de fournir une information du type tout ou rien, empêchant ainsi tout réglage de l'effort de freinage par l'utilisateur lors notamment d'un démarrage en côte du véhicule.

Afin de remédier à cet inconvénient, on connaît également notamment par la demande de brevet français n°98 07524 déposée le 15 juin 1998 par les présentes demanderesses, un dispositif de commande d'un frein secondaire électrique constitué d'un levier de frein à main traditionnel associé à un actionneur électrique lui-même relié à des moyens d'enroulement/déroulement des câbles d'actionnement du frein secondaire du véhicule qui permet de mettre sous tension les câbles de serrage du frein secondaire en fonction d'une information de position dudit levier délivrée par un capteur qui lui est associé. Un calculateur permet de piloter en fonction de l'information de position du levier les quantités de courant à envoyer à l'actionneur électrique. L'utilisateur gère ainsi la tension du câble et sa vitesse de mise en tension et régule celle-ci en fonction de la décélération du véhicule.

Un tel dispositif de commande à main d'un frein de stationnement électrique s'avère satisfaisant pour régler les efforts de freinage lors par exemple d'un démarrage en côte ou encore en décélération dynamique. Toutefois, lorsque l'utilisateur désire le serrage ou le desserrage complet des organes de freinage une telle commande se révèle peu agréable.

Le but de la présente invention est de proposer un dispositif de commande à main d'un frein de stationnement du type décrit ci-dessus qui permet de remédier à l'inconvénient susmentionné.

A cet effet, la présente invention concerne un dispositif de commande à main d'un actionneur électrique d'activation d'un système fonctionnel, notamment d'un frein secondaire de véhicule automobile, comportant un levier de commande actionnable par un utilisateur pour piloter l'alimentation de l'actionneur électrique en fonction d'une information de position dudit levier délivrée par un capteur qui lui est associé, ledit capteur étant relié à un calculateur pilotant en fonction de l'information de position du levier les quantités de courant à envoyer à l'actionneur électrique, caractérisé en ce que le levier de commande est pourvu d'un interrupteur qui est relié au calculateur de manière à transmettre en fonction de la position de l'interrupteur une information soit d'alimentation maximale en quantité d'énergie de l'actionneur afin de serrer les organes de freinage soit une remise à niveau proportionnel à la position du levier des moyens d'alimentation de façon à desserrer les organes de freinage.

Selon une autre caractéristique avantageuse de la présente invention, l'actionneur électrique est constitué d'un moteur électrique associé à des moyens d'enroulement/déroulement d'au moins un câble d'actionnement du système fonctionnel.

Selon encore une autre caractéristique, l'interrupteur est un bouton poussoir.

Selon encore une autre caractéristique, le levier de commande est monté libre en rotation autour d'un axe transversal solidaire du plancher du véhicule.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est un schéma synoptique illustrant l'implantation d'un dispositif de commande d'un actionneur électrique d'activation d'un système fonctionnel tel qu'un frein secondaire de véhicule automobile,
- la figure 2 est un schéma synoptique illustrant la structure et le fonctionnement d'un tel dispositif, et
- la figure 3 est un schéma illustrant les différents modes opératoires du dispositif de commande à main du frein secondaire selon l'invention.

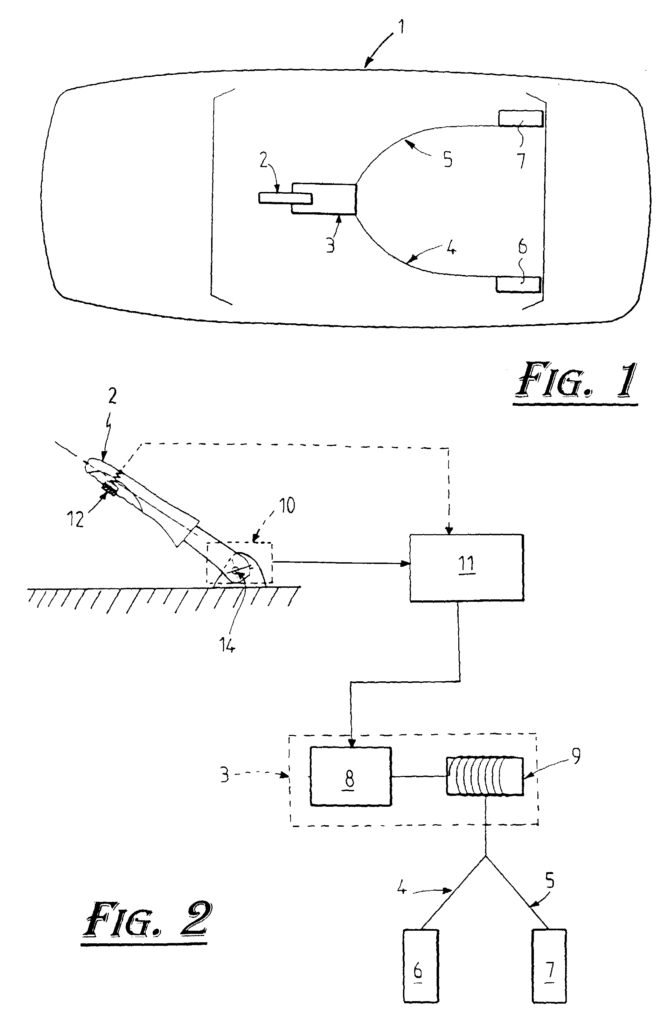

On a représenté à la figure 1, un véhicule automobile 1, qui est équipé d'un système fonctionnel tel qu'un frein secondaire désigné également dans l'état de la technique antérieure sous le nom de frein de parcage.

Ce système fonctionnel comporte un levier de commande 2 monté libre en rotation autour d'un axe transversal 14, porté par le plancher du véhicule, comme visible à la figure 2, qui est associé à un actionneur électrique 3 permettant de contrôler la mise sous tension de câbles 4, 5 associés respectivement à un étrier 6, 7 de freinage d'une roue arrière du véhicule.

L'actionneur électrique 3 est constitué d'un moteur électrique associé à des moyens d'enroulement/déroulement des câbles d'actionnement du frein secondaire du véhicule.

On a représenté à la figure 2, un exemple de réalisation du dispositif de commande à main d'un frein secondaire.

Sur cette figure, on a représenté le levier de commande 2 et l'actionneur électrique 3 d'activation du système fonctionnel.

Cet actionneur électrique 3 comporte par exemple un moteur électrique 8 associé à des moyens d'enroulement/déroulement 9 d'au moins un câble d'actionnement du système fonctionnel.

Le levier de commande 2 est associé à un capteur de position 10 destiné à transmettre à un calculateur 11 auquel il est relié une information de déplacement dudit levier, en sens et en amplitude le long de la course de déplacement du levier 2 entre ses positions extrêmes.

Le calculateur 11 est ainsi apte à en tirer une information de commande de moyens d'alimentation de l'actionneur pour appliquer à celui-ci une quantité de courant correspondant au déplacement du levier à partir d'une loi de correspondance prédéterminée.

On réalise ainsi un asservissement entre la tension des câbles et l'information de position de l'organe de commande délivrée par le capteur 10.

Selon la présente invention, le levier de commande 2 est pourvu d'un interrupteur du type bouton poussoir à mémoire de position 12 qui est relié au calculateur 11 de manière à transmettre en fonction de la position active ou inactive de l'interrupteur une information soit d'alimentation maximale en quantité d'énergie de l'actionneur afin de serrer les organes de freinage soit une remise à niveau proportionnel à la position du levier des moyens d'alimentation de façon à desserrer les organes de freinage, c'est-à-dire par voie de conséquence à enrouler ou à dérouler les câbles 4, 5 reliés aux étriers 6 et 7.

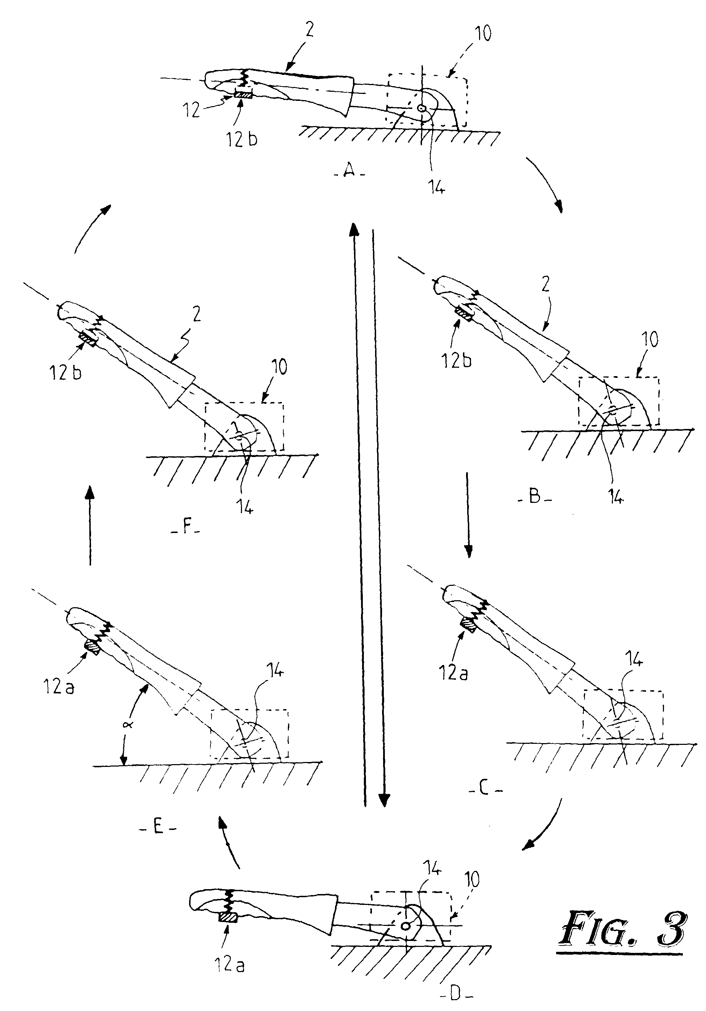

Le fonctionnement du dispositif de commande à main du frein secondaire électrique selon la présente invention va maintenant être décrit en relation avec les figures 2 et 3.

Le véhicule en position de stationnement a les organes de freinage 7 et 8 serrés de sorte que le levier de commande 2 se trouve en position basse, c'est-à-dire disposé sensiblement horizontalement et l'interrupteur 12 en position actionné 12a comme représenté à la figure 3 à la position A.

Dès lors que l'utilisateur désire passer à la position de roulage correspondant au desserrage complet des organes de freinage, représenté à la position D sur la figure 3, il lui suffit d'actionner l'interrupteur 12 en position 12b du levier de commande ce qui envoi une information au calculateur 11 entraînant ainsi une remise à zéro des moyens d'alimentation 3, c'est-à-dire un déroulement des câbles 4, 5.

Cette action se révèle ainsi particulièrement simple à réaliser et ne nécessite pas un serrage préalable par le déplacement du levier 2.

On comprend aisément qu'inversement, il est possible pour l'utilisateur de passer de la position de roulage D à la position de parcage A du véhicule, en actionnant l'interrupteur 12 qui transmet ainsi une information de serrage complet des organes de freinage au calculateur 11. Le calculateur détermine alors la quantité de courant nécessaire à envoyer pour enrouler au maximum les câbles 4, 5 et ainsi les mettre en tension.

Lors d'une opération de démarrage en côte, positions B et C, l'utilisateur ayant serré préalablement complètement les organes de freinage en actionnant l'interrupteur 12, se retrouve en position A. L'utilisateur doit alors tirer le levier de commande 2 suivant un angle α correspondant à un serrage de frein à main traditionnel, entraînant ainsi une information de déplacement du levier qui est mesuré par le capteur 10 et transmis au calculateur 11. L'utilisateur actionne alors l'interrupteur 12 afin de desserrer les organes de freinages. Le calculateur 11 gère alors la différence entre la course complète d'un serrage des organes de freinage et la course demandée par le déplacement du levier 2 afin d'envoyer une quantité de courant suffisante pour dérouler les câbles 4, 5.

L'utilisateur peut ainsi gérer la tension des câbles et sa vitesse de mise en tension et réguler ainsi l'effort de serrage des organes de freinage en déplaçant dans un sens ou dans un autre le levier de commande 2.

De même, lorsque ce dernier désire effectué une décélération dynamique au moyen des organes de freinage, positions E à F, un simple déplacement du levier de commande 2 vers le haut permet d'envoyer une information de serrage progressif des organes de freinage au calculateur 11 qui transmet à l'actionneur 3 une quantité de courant correspondant au déplacement du levier.

On notera que le serrage des organes de freinage peut être proportionnel à la course du levier 2.

Une simple action sur l'interrupteur 12 permet alors de serrer complètement les organes de freinage en transmettant cette information au calculateur 11 et de maintenir cet état. Ainsi, l'utilisateur est libre de basculer vers le bas levier 2.

On comprend à la lecture de la description ci-dessus que le dispositif de commande à main d'un frein secondaire selon la présente invention s'avère particulièrement simple à utiliser et offre l'avantage de pouvoir actionner un simple serrage ou desserrage des freins par une simple commande électrique, sans que cette action nécessite une action sur le levier de commande 2.

Bien que l'invention ait été décrite en liaison avec un mode de réalisation particulier, elle comprend tous les équivalents techniques des moyens décrits.

## Revendications

1. Dispositif de commande à main d'un actionneur électrique d'activation d'un système fonctionnel, notamment d'un frein secondaire de véhicule automobile, comportant un levier de commande actionnable par un utilisateur pour piloter l'alimentation de l'actionneur électrique en fonction d'une information de position dudit levier délivrée par un capteur qui lui est associé, ledit capteur étant relié à un calculateur (11) pilotant en fonction de l'information de position du levier les quantités de courant à envoyer à l'actionneur électrique (3), caractérisé en ce que le levier de commande (2) est pourvu d'un interrupteur (12) qui est relié au calculateur (11) de manière à transmettre en fonction de la position de l'interrupteur une information soit d'alimentation maximale en quantité d'énergie de l'actionneur afin de serrer les organes de freinage soit une remise à niveau proportionnel à la position du levier (2) des moyens d'alimentation de façon à desserrer les organes de freinage.

2. Dispositif selon la revendication 1, caractérisé en ce que l'actionneur électrique (3) est constitué d'un moteur électrique (8) associé à des moyens d'enroulement/déroulement (9) d'au moins un câble d'actionnement du système fonctionnel.

3. Dispositif selon l'une quelconque des revendications précédentes, caractérisé en ce que le levier de commande (2) est monté libre en rotation autour d'un axe transversal (14) solidaire du plancher du véhicule.

4. Dispositif selon l'une quelconque des revendications précédentes, caractérisé en ce que l'interrupteur (12) est un bouton poussoir.

5. Dispositif selon l'une quelconque des revendications précédentes, caractérisé en ce que le calculateur (11) est apte à transmettre à l'actionneur électrique (3) une quantité de courant correspondant au déplacement du levier à partir d'une loi de correspondance prédéterminée.
